# EUROPEAN PATENT APPLICATION

(11) **EP 4 851 371 A1**
(43) Date of publication of application: **09.12.2026**
(21) Application number: 26183223.2
(22) Date of filing: 05.06.2026
(51) Int. Cl.: D21H 27/40, B31F 5/04, B32B 3/28, B32B 7/12, B32B 29/08, D21F 11/12, D21H 11/14, D21H 27/10, D21H 27/30, D21H 27/38

(54) **CORRUGATED BOARD, PACKAGING ITEM, AND METHOD**

(30) Priority: 06.06.2025 AT 503972025
(71) Applicant: Mondi AG, 1030 Wien (AT)
(72) Inventor: Möhle, Marvin, 1030 Wien (AT); Motylewski, Marek, 86-200 Chelmno (PL); Wietrzykowski, Jan, 86-100 Swiecie (PL)
(74) Representative: Puchberger & Partner Patentanwälte

(57) **Abstract**

The invention relates to a corrugated board comprising a corrugating medium (1), a first liner (2), and a second liner (3), wherein the first liner (2) has a top ply (4) and a bottom ply (5), wherein the top ply (4) is predominantly or fully made from virgin Kraft pulp, wherein the bottom ply (5) predominantly or fully made from recycled fiber, wherein starch is used to attach the first liner (2) to the corrugating medium (1) in an amount of from 1.97 g/m² to 4.63 g/m², depending on the flute type of the corrugating medium. The invention also relates to a packaging item and a production method.

## Description

The present invention pertains to a corrugated board, a packaging item, and method for the production of a corrugated board, as defined in the independent claims. Generally, the invention relates to certain advancements in the field of corrugated board materials, with a particular focus on corrugated board having a high content of recycled fiber while being suitable for high-quality printing applications.

Corrugated board typically consists of a combination of liner and fluting, the fluting being sandwiched between the liners and bonded together via a typically starch-based adhesive.

The liners impart mechanical strength to the corrugated board, and at least one of the liners, typically the outer liner, may serve as the primary surface for printing. To achieve the necessary visual quality, this outer liner, or at least its surface, is commonly required to be white. Established liners commercially used for this purpose are white Kraftliners (WKL, WTKL), which are predominantly composed of virgin Kraft pulp, and white top testliners (WTTL), which are based predominantly on recycled fibers with a white fiber-covered top layer. Both liner types are often sized and available in coated and uncoated versions, with the coating usually containing pigments. Specifics of these liners have for example defined by the Confederation of European Paper Industries (CEPI; European list of corrugated base papers, 6th Ed., Updated in Oct. 2022).

In demanding printing applications, fully virgin white Kraftliners are typically preferred over recycled-based white testliners due to superior optical and surface properties, including: improved fiber formation and uniformity; higher whiteness and brightness levels; reduced greyish show-through from underlying layers; lower surface mottling, as reflected in Kheops values; reduced surface roughness.

However, the use of virgin fiber-based white Kraftliners, although beneficial for printing, introduces disadvantages. While from a structural perspective, the mechanical properties of the corrugated board could often be satisfied using recycled-based liners, in order to meet visual or print-quality expectations, higher-cost virgin fibers are used. This particularly leads to: increased material costs (due to the higher price of virgin fiber-based liners); greater resource consumption during processing (e.g., higher starch, energy, and time requirements for conditioning virgin fiber); reduced compatibility and bonding performance when combining virgin and recycled layers; inefficient use of raw materials, particularly virgin fibers, in applications that do not strictly require them from a mechanical perspective.

In response to these inefficiencies, hybrid liner grades such as Kraft top white liners (KTW) have emerged, consisting of a top (or outer) ply predominantly or fully made of virgin fiber, and a bottom (or inner) ply predominantly or fully made of recycled fiber. The grammage of the bottom ply may particularly be between 40% and 80% of the total grammage of this liner, with the remainder of the grammage being made up by the top ply.

While such liners offer an improved balance between print quality and sustainability, there remains a potential for further optimization in the selection and combination of commercially available paper grades and production parameters.

It has now been surprisingly found that the use of Kraft top white liners in corrugated board allows for the reduction of the amount of starch-based adhesive required to achieve a sufficient bonding strength between liner and fluting.

The present invention thereby enables more efficient corrugated board production for printing applications by the reduction of the required adhesive amount. The reduction of adhesive not only allows a more resource-efficient production, but also reduces energy consumption during the curing process of the adhesive. Potential further advantages will become apparent from the following description.

The invention thus generally relates to a corrugated board having a corrugating medium (also referred to as the fluting) with liners being attached to the opposing outer faces of the corrugating medium. In other words, the corrugating medium is sandwiched between the liners.

The corrugating medium particularly has a wave-like structure, as is well known in the art, wherein the liners are attached to the wave tips of the corrugating medium. According to industry standards, different flute types exist, varying in height of the flutes and the number of flutes per meter.

Typical flute types that can be used in a corrugated board according to the invention are: A-flute having a flute height of approx. 4.5 mm to 5.0 mm and typically from 105 to 125 flutes per meter; B-flute having a flute height of approx. 2.5 mm to 3.0 mm and typically from 145 to 165 flutes per meter; C-flute having a flute height of approx. 3.5 mm to 4.0 mm and typically from 120 to 145 flutes per meter; E-flute having a flute height of approx. 1.0 mm to 1.8 mm and typically from 290 to 330 flutes per meter.

In the corrugated board of the invention, at least one of the liners, in particular a first (or outer) liner, may be a two-ply liner, having a top ply and a bottom ply. The top ply typically forms an outer surface of the corrugated board and the bottom ply typically is in direct contact with and adhered to the corrugating medium. The first liner is typically uncoated.

Preferably, the fiber contained in the top ply of the first liner is predominantly or completely virgin Kraft fiber, and the fiber contained in the bottom ply of the first liner is predominantly or completely recycled fiber. The virgin fiber contained in the top ply particularly is bleached fiber.

The fiber contained in the second (or inner) liner and/or in the corrugating medium may predominantly or completely be recycled fiber.

The amount of starch used for attaching the first liner to the corrugating medium may depend on the flute type of the corrugating medium, but it may generally vary between 1.5 g/m² and 4.5 g/m². Typically, flute types with a higher number of flutes per meter will require a higher amount of starch, whereas flute types with a lower number of flutes per meter will require a lower amount of starch.

In specific cases, the following amounts of starch can be provided:
- from 1.97 g/m² to 2.66 g/m², in particular from 1.97 g/m² to 2.48 g/m², if the corrugating medium has an A-flute structure with from 105 to 125 flutes per meter, such as approx. 110 flutes per meter;
- from 2.38 g/m² to 3.22 g/m², in particular from 2.38 g/m² to 3.00 g/m², if the corrugating medium has a B-flute structure with from 145 to 165 flutes per meter, such as approx. 154 flutes per meter;
- from 2.20 g/m² to 3.00 g/m², in particular from 2.20 g/m² to 2.80 g/m², if the corrugating medium has a C-flute structure with from 120 to 145 flutes per meter, such as approx. 128 flutes per meter;
- from 3.42 g/m² to 4.63 g/m², in particular from 3.42 g/m² to 4.32 g/m², if the corrugating medium has an E-flute structure with from 290 to 330 flutes per meter, such as approx. 315 flutes per meter.

In general, this allows a reduction of starch use by around 55% as compared to commonly applied amounts of starch.

Except otherwise mentioned or clear from the context, the amounts of starch in g/m² refer to m² of corrugated board.

When referred to the amount of starch as adhesive in the context of the present invention, it has to be considered that this particularly refers to the starch applied to the tips of the corrugating medium before merging it with the liner. In other words, said amount of starch does not include starch that is optionally contained in the corrugating medium and/or in the liner as mass and/or surface starch.

The amount of starch in g/m² particularly refers to the dry mass of starch applied to an average area with an area of at least 5 cm x 5 cm. This is due to the fact that starch application will only occur on the tips of the flutes.

As compared to commonly applied amounts of starch, the corrugated board of the invention may offer similar adhesion strength between the first liner and the corrugating medium.

Wheat starch may be used as a specific type of starch having at least 95 wt.-% of particles with a size lower than 200 µm, such as lower than 160 µm, as determined by sieve analysis and/or a pH value of between 5,0 and 7,0.

The beneficial effects can particularly be obtained if the bottom ply, that is the ply of the first liner being directly adhered to the corrugating medium, has a grammage of at least 45 g/m², determined in accordance with ISO 536:2019.

In order to provide excellent surface properties, which are specifically suitable for high-quality printing applications, the outer surface of the corrugated board, *i.e.,* the top ply of the first liner, may have one or more of the following: a low mottling index; a low surface roughness; a high brightness. The first liner, in particular its top ply, mal also contain a mineral filler, such as calcium carbonate, in particular ground and/or precipitated calcium carbonate.

Mottling index, surface roughness, and brightness may be determined according to standard methods known and commonly used in the art. Mottling index may specifically relate to the Kheops Mottling Index as determined by a Techpap Mottling Sensor (Techpap SAS, Grenoble, France). Surface roughness may specifically relate to the Bendtsen roughness determined in accordance with ISO 8791-2:2013. Brightness may specifically relate to the brightness determined in accordance with ISO 2470-2:2008. While the fiber contained in said top ply preferably is predominantly or completely virgin fiber, the remainder of the fiber of the corrugated board may be predominantly or completely recycled fiber. That way, a corrugated board with an amount of particularly more than 80 wt.-%, such as more than 90 wt.-%, of recycled fiber in relation to the total fiber can be obtained, while preserving visually excellent surface properties.

The fibrous composition used for the preparation of the bottom layer of the first liner, the corrugating medium, the second liner, and any other layer, if present, may for example be recycled Kraft fiber or recycled semichemical fiber. In a specific embodiment, said fibrous composition is OCC (old corrugated cardboard) fiber, which is particularly obtained from material as defined in EN 643:2014 class 1.05 including all sub-classes. It may be preferable, if the fibrous composition used for production of the first liner's bottom ply and the corrugating medium is the same or essentially the same, *i.e.,* with at most minor variations in fiber composition. Without wishing to be bound to this theory, it is assumed that adhesion can be improved by the use of similar fibrous compositions due to a similar level of hydrophobicity of the contacting surfaces.

The corrugated board of the invention may be used for the production of a packaging item, such as a tray or a box, wherein the top ply of the first liner forms an outer surface of the packaging item.

The corrugated board may be prepared via a method, which represents a further aspect of the invention.

The first liner is particularly prepared from two different suspensions, which suspensions contain a fibrous composition, water, and optionally one or more additives. The fibrous composition contained in the suspension relates to the fiber contained in the final product. From said two suspensions, two distinct webs are formed by partially dewatering the suspension in the known manner in papermaking, after which the two webs are merged to form a two-ply web. Said two-ply web is further pressed and de-watered to form the first liner.

The corrugating medium is prepared by guiding a flat material through a pair of serrated rollers, depending on the desired flute type after having been preconditioned by applying heat and/or steam.

In the next steps of the production method, a starch suspension is applied to one side of the corrugating medium, before being merged with one of the liners, wherein the liner is typically pre-heated. The preheated liners are typically glued to the corrugating medium one after the other, *i.e.,* in a sequential manner.

The lower amount of starch required for gluing the first liner to the corrugating medium provides the possibility of lowering the temperature of the heating device used for preheating the liner, which heating device in case of the first liner has in particular one or more heating plate, and/or allows for increasing the conveying speed of the materials, thus decreasing energy input and increasing production efficiency, respectively.

Reduction of heat also provides the benefit of not overheating the liner, allowing the preservation of the liner's optical properties. This potentially also allows using a first liner with lower initial optical properties, due to reduced deterioration in the final corrugated board.

Using a mineral filler, such as calcium carbonate, in the liner may be beneficial in supporting the heat reduction by providing increased thermal conductivity of the liner.

The invention particularly relates to a corrugated board comprising a corrugating medium, a first liner, and a second liner, the liners being attached to opposing sides of the corrugating medium, wherein the first liner has a top ply and a bottom ply, the bottom ply being attached to the corrugating medium,
wherein the top ply is made from a suspension consisting of: water; a first fibrous composition; optionally, particularly non-fibrous, additives; wherein at least 90 wt.-%, such as at least 95 wt.-%, of the dry weight of the first fibrous composition is virgin Kraft pulp,
wherein the bottom ply is made from a suspension consisting of: water; a second fibrous composition; optionally, particularly non-fibrous, additives; wherein at least 80 wt.-%, such as at least 90 wt.-%, of the dry weight of the second fibrous composition is recycled fiber, in particular recycled Kraft fiber and/or recycled semichemical fiber,
wherein the grammage of the bottom ply is between 40% and 80%, in particular between 65% and 75%, of the total grammage of the first liner.

Preferably, it is provided that the first liner is attached to the corrugating medium using starch, wherein starch is used in an amount of from 1.97 g/m² to 2.66 g/m², in particular from 1.97 g/m² to 2.48 g/m², if the corrugating medium has an A-flute structure, or wherein starch is used in an amount of from 2.38 g/m² to 3.22 g/m², in particular from 2.38 g/m² to 3.00 g/m², if the corrugating medium has a B-flute structure, or wherein starch is used in an amount of from 2.20 g/m² to 3.00 g/m², in particular from 2.20 g/m² to 2.80 g/m², if the corrugating medium has a C-flute structure, or wherein starch is used in an amount of from 3.42 g/m² to 4.63 g/m², in particular from 3.42 g/m² to 4.32 g/m², if the corrugating medium has an E-flute structure.

It may be provided that the first liner is attached to of the corrugating medium with an adhesion strength of at least 600 N/m, such as at least 800 N/m, determined in accordance with the FEFCO testing method no. 11.

It may be provided that the fibrous composition of the top ply of the first liner is bleached, and/or that the first liner is uncoated.

It may be provided that the corrugating medium is made from a suspension consisting of: water; a third fibrous composition; optionally, particularly non-fibrous, additives; wherein at least 80 wt.-%, such as at least 90 wt.-%, of the dry weight of the third fibrous composition is recycled fiber, in particular recycled Kraft fiber and/or recycled semichemical fiber.

It may be provided that the second liner or at least one ply of the second liner is made from a suspension consisting of: water; a fourth fibrous composition; optionally, particularly non-fibrous, additives; wherein at least 80 wt.-%, such as at least 90 wt.-%, of the dry weight of the fourth fibrous composition is recycled fiber, in particular recycled Kraft fiber and/or recycled semichemical fiber.

It may be provided that the corrugating medium and the bottom ply of the top liner are made from the same suspension, or from a suspension having the same or essentially the same composition.

It may be provided that the bottom ply of the first liner has a grammage of at least 45 g/m², determined in accordance with ISO 536:2019.

It may be provided that the top ply of the first liner contains a mineral filler in an amount of at least 5 wt.-%, preferably from 5 wt.-% to 20 wt.-%, in relation to the dry weight of the top ply of the first liner, wherein the mineral filler optionally is calcium carbonate, such as ground and/or precipitated calcium carbonate.

It may be provided that the first liner on the side of the top ply has a Kheops Mottling Index of at most 60, preferably of at most 50.

It may be provided that the first liner on the side of the top ply has a brightness of at least 75%, determined in accordance with ISO 2470-2:2008.

It may be provided that at least 90 wt.-% of the dry weight of the total fibrous composition of the corrugated board is recycled fiber.

It may be provided that the corrugated board comprises at least one additional medium and/or liner.

The invention also relates to a packaging item, such as a tray or a box, comprising or consisting of the corrugated board as described herein.

The invention also relates to a method for producing a corrugated board having a corrugating medium, a first liner, and a second liner, each of the liners being attached to one side of the corrugating medium, wherein the first liner has a top ply and a bottom ply, the bottom ply being attached to the corrugating medium,
wherein the top ply is made from a suspension consisting of: water; a first fibrous composition; optionally, particularly non-fibrous, additives; wherein at least 90 wt.-%, such as at least 95 wt.-%, of the dry weight of the first fibrous composition is virgin Kraft pulp,
wherein the bottom ply is made from a suspension consisting of: water; a second fibrous composition; optionally, particularly non-fibrous, additives; wherein at least 80 wt.-%, such as at least 90 wt.-%, of the dry weight of the second fibrous composition is recycled fiber, in particular recycled Kraft fiber and/or recycled semichemical fiber, wherein the grammage of the bottom ply is between 40% and 80%, in particular between 65% and 75%, of the total grammage of the first liner (2),

Preferably, it is provided that starch is used to attach the first liner to the corrugating medium, wherein starch is used in an amount of from 1.97 g/m² to 2.66 g/m², in particular from 1.97 g/m² to 2.48 g/m², if the corrugating medium has an A-flute structure, or wherein starch is used in an amount of from 2.38 g/m² to 3.22 g/m², in particular from 2.38 g/m² to 3.00 g/m², if the corrugating medium has a B-flute structure, or wherein starch is used in an amount of from 2.20 g/m² to 3.00 g/m², in particular from 2.20 g/m² to 2.80 g/m², if the corrugating medium has a C-flute structure, or wherein starch is used in an amount of from 3.42 g/m² to 4.63 g/m², in particular from 3.42 g/m² to 4.32 g/m², if the corrugating medium has an E-flute structure.

It may be provided that for attaching the first liner to the corrugating medium, the surface of the bottom ply of the first liner is brought to a temperature of between 90°C and 110°C.

It may be provided that upon contacting with the first liner, the corrugating medium is brought to a temperature of between 70°C and 100°C.

It may be provided that for attaching the first liner to the corrugating medium, a surface of the of the first liner is brought into contact with one or more heating plates for a total duration of between 1.3 s and 3.5 s, optionally of between 1.5 s and 2.5 s, wherein the one or more heating plates have a surface temperature of from 110°C and 115°C.

It may be provided that before attaching the first liner to the corrugating medium, the first liner has on the side of the top ply a Bendtsen roughness of below 1000, such as below 800, or below 600, determined in accordance with ISO 8791-2:2013.

Further features of the invention become apparent from the claims, the drawing, and the description of the embodiment. In the following, the present invention will be explained in further detail by making reference to an exemplary embodiment of the invention. This embodiment is not intended to limit the scope of the claims.

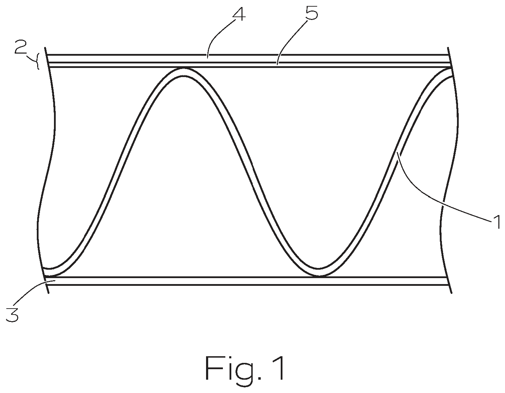

Fig. 1 shows a schematic detail view of a corrugated board according to an inventive embodiment.

Except otherwise mentioned or otherwise clearly apparent from the context, Fig. 1 shows the following features: Corrugating medium 1; first liner 2; second liner 3; top ply 4 (of first liner 2); bottom ply 5 (of first liner 2).

As can be seen in Fig. 1, the corrugated board is made of a corrugating medium 1 sandwiched between a first liner 2 and a second liner 3. The first liner 2 has a two-ply structure with a top ply 4 and a bottom ply 5.

The liners 2, 3 are glued to the corrugating medium 1 using a starch adhesive, which is only applied to the tips of the fluted corrugating medium 1, which in the present example is a C-flute with approx. 128 flutes per meter.

The bottom ply 5 of the first liner 2 is in contact with the corrugating medium 1, while the top ply 4 of the first liner 2 forms an outer surface of the corrugated board.

The top ply 4 of the first liner 2 is uncoated and made from a suspension containing a fibrous composition with 100 wt.-% bleached virgin Kraft fiber and an amount of 10 wt.-% in relation of the total dry weight of the material of precipitated calcium carbonate as mineral filler.

The bottom ply 5 of the first liner 2 is made from a suspension containing a fibrous composition with 100 wt.-% recycled Kraft fiber.

The grammage of the first liner 2 as determined in accordance with ISO 536:2019 is approx. 135 g/m², with approx. 60% of this grammage being made up by the bottom ply 5.

The second liner 3 as well as the corrugating medium 1 are made from essentially the same suspension as the bottom ply 5. The grammage of the corrugating medium 1 is approx. 150 g/m² and the grammage of the second liner 3 is approx. 170 g/m², both grammages determined in accordance with ISO 536:2019.

Approx. 2.5 g/m² of starch, namely wheat starch having a pH value of between 5.0 and 7.0 and being a powder with more than 95 wt.-% having a particle size of lower than 160 µm determined by sieve analysis, are used to glue the first liner 2 to the corrugating medium 1. Approximately the same amount of starch is used to glue the second liner 3 to the corrugating medium 1.

The corrugated board according to this embodiment is prepared as follows: The material for the corrugating medium 1 is guided through two serrated rollers to prepare the fluting. Then, an aqueous starch suspension is applied to one side of the corrugating medium 1 using an application roller, before pressing the heated second liner 3 onto it. After that, starch suspension is applied to the other side of the corrugating medium 1, before pressing the heated first liner 2 onto it.

The first liner 2 is heated by guiding it over a set of heated plates having a temperature of between 110°C and 115°C with a conveying speed of approx. 330 m/min, resulting in a total contact time with the heating plates of approx. 2.0 s.

The corrugated board, which is obtained in this way, offers superior optical properties on the surface of the top ply 4, while having a share of recycled fiber of more than 90 wt.-% based on the total fiber in the board.

Specifically, the corrugated board of this embodiment has the properties listed in Table 1 below.

**Table 1: Properties of the corrugated board according to the embodiment**

| ***Parameter*** | ***Value*** | ***Unit*** | ***determined in accordance with*** |
|---|---|---|---|
| Adhesion strength first liner 2 to corrugating medium 1 | 896.8 | N/m | FEFCO no. 11 |
| ISO brightness of top ply 4 | 77.1 | % | ISO 2470-1:2016-09 |
| D65 brightness of top ply 4 | 81.3 | % | ISO 2470-2:2008-11 |

The samples were stored for at least 24 hours at standard climatic conditions according to DIN EN ISO 187:2023-02 at 23 ± 1 °C and 50 ± 2 % rel. humidity and were tested at the same climatic conditions.

A comparative example of a corrugated board according to the prior art was prepared, where the first liner had two plies, with the top ply made from 100 wt.-% bleached virgin Kraft fiber, and the bottom ply made from 100 wt.-% unbleached virgin kraft fiber, *i.e.,* a White Top Kraft Liner. The corrugating medium was made from a suspension containing a fibrous composition with 100 wt.-% recycled fiber and the second liner was a Kraft Top Liner with a top ply made from a suspension containing a fibrous composition with 100 wt.-% virgin fiber and a bottom ply made from a suspension containing a fibrous composition with 100 wt.-% recycled fiber.

The grammages are comparable to those of the inventive embodiment. The corrugating medium is a C-flute with approx. 128 flutes per meter.

Approx. 5.0 g/m² of starch of the same type as in the inventive embodiment were used to glue the first liner to the corrugating medium.

The properties of the comparative example are listed in Table 2 below.

**Table 2: Properties of the corrugated board according to the comparative (non-inventive) embodiment**

| ***Parameter*** | ***Value*** | ***Unit*** | ***determined in accordance with*** |
|---|---|---|---|
| Adhesion strength first liner to corrugating medium | 755.0 | N/m | FEFCO no. 11 |
| ISO brightness of top ply | 77.2 | % | ISO 2470-1:2016-09 |
| D65 brightness of top ply | 83.2 | % | ISO 2470-2:2008-11 |

The samples were stored for at least 24 hours at standard climatic conditions according to DIN EN ISO 187:2023-02 at 23 ± 1 °C and 50 ± 2 % rel. humidity and were tested at the same climatic conditions.

Comparison of the results shows that the inventive corrugated board has a higher adhesion strength of first liner to corrugating medium, while requiring less starch. At the same time, optical properties of the surface can be maintained and the recycled content can be elevated.

## Claims

1. A **corrugated board** comprising a corrugating medium (1), a first liner (2), and a second liner (3), the liners (2, 3) being attached to opposing sides of the corrugating medium (1), wherein the first liner (2) has a top ply (4) and a bottom ply (5), the bottom ply (5) being attached to the corrugating medium (1),
- wherein the top ply (4) is made from a suspension consisting of: water; a first fibrous composition; optionally, particularly non-fibrous, additives; wherein at least 90 wt.-%, such as at least 95 wt.-%, of the dry weight of the first fibrous composition is virgin Kraft pulp,
- wherein the bottom ply (5) is made from a suspension consisting of: water; a second fibrous composition; optionally, particularly non-fibrous, additives; wherein at least 80 wt.-%, such as at least 90 wt.-%, of the dry weight of the second fibrous composition is recycled fiber, in particular recycled Kraft fiber and/or recycled semichemical fiber,
- wherein the grammage of the bottom ply (5) is between 40% and 80%, in particular between 65% and 75%, of the total grammage of the first liner (2),
**characterized in that** the first liner (2) is attached to the corrugating medium (1) using starch,
- wherein starch is used in an amount of from 1.97 g/m² to 2.66 g/m², in particular from 1.97 g/m² to 2.48 g/m², if the corrugating medium (1) has an A-flute structure, or
- wherein starch is used in an amount of from 2.38 g/m² to 3.22 g/m², in particular from 2.38 g/m² to 3.00 g/m², if the corrugating medium (1) has a B-flute structure, or
- wherein starch is used in an amount of from 2.20 g/m² to 3.00 g/m², in particular from 2.20 g/m² to 2.80 g/m², if the corrugating medium (1) has a C-flute structure, or
- wherein starch is used in an amount of from 3.42 g/m² to 4.63 g/m², in particular from 3.42 g/m² to 4.32 g/m², if the corrugating medium (1) has an E-flute structure.

2. The corrugated board according to claim 1, wherein the first liner (2) is attached to of the corrugating medium (1) with an adhesion strength of at least 600 N/m, such as at least 800 N/m, determined in accordance with the FEFCO testing method no. 11.

3. The corrugated board according to claim 1 or 2, wherein the fibrous composition of the top ply (4) of the first liner (2) is bleached, and/or wherein the first liner (2) is uncoated.

4. The corrugated board according to any of claims 1 to 3, wherein the corrugating medium (1) is made from a suspension consisting of: water; a third fibrous composition; optionally, particularly non-fibrous, additives; wherein at least 80 wt.-%, such as at least 90 wt.-%, of the dry weight of the third fibrous composition is recycled fiber, in particular recycled Kraft fiber and/or recycled semichemical fiber.

5. The corrugated board according to any of claims 1 to 4, wherein the second liner (3) or at least one ply of the second liner (3) is made from a suspension consisting of: water; a fourth fibrous composition; optionally, particularly non-fibrous, additives; wherein at least 80 wt.-%, such as at least 90 wt.-%, of the dry weight of the fourth fibrous composition is recycled fiber, in particular recycled Kraft fiber and/or recycled semichemical fiber.

6. The corrugated board according to any of claims 1 to 5, wherein the corrugating medium (1) and the bottom ply (5) of the top liner (2) are made from the same suspension, or from a suspension having the same or essentially the same composition.

7. The corrugated board according to any of claims 1 to 6, wherein the bottom ply (5) of the first liner (2) has a grammage of at least 45 g/m², determined in accordance with ISO 536:2019 and/or the top ply (4) of the first liner (2) contains a mineral filler in an amount of at least 5 wt.-%, preferably from 5 wt.-% to 20 wt.-%, in relation to the dry weight of the top ply (4) of the first liner (2), wherein the mineral filler optionally is calcium carbonate, such as ground and/or precipitated calcium carbonate.

8. The corrugated board according to any of claims 1 to 7, wherein the first liner (2) on the side of the top ply (4) has a Kheops Mottling Index of at most 60, preferably of at most 50 and/or wherein the first liner (2) on the side of the top ply (4) has a brightness of at least 75%, determined in accordance with ISO 2470-2:2008.

9. The corrugated board according to any of claims 1 to 8, wherein at least 90 wt.-% of the dry weight of the total fibrous composition of the corrugated board is recycled fiber.

10. The corrugated board according to any of claims 1 to 9, comprising at least one additional medium and/or liner.

11. A **packaging item,** such as a tray or a box, comprising or consisting of the corrugated board according to any of claims 1 to 10.

12. A **method** for producing a corrugated board having a corrugating medium (1), a first liner (2), and a second liner (3), each of the liners (2, 3) being attached to one side of the corrugating medium (1), wherein the first liner (2) has a top ply (4) and a bottom ply (5), the bottom ply (5) being attached to the corrugating medium (1),
- wherein the top ply (4) is made from a suspension consisting of: water; a first fibrous composition; optionally, particularly non-fibrous, additives; wherein at least 90 wt.-%, such as at least 95 wt.-%, of the dry weight of the first fibrous composition is virgin Kraft pulp,
- wherein the bottom ply (5) is made from a suspension consisting of: water; a second fibrous composition; optionally, particularly non-fibrous, additives; wherein at least 80 wt.-%, such as at least 90 wt.-%, of the dry weight of the second fibrous composition is recycled fiber, in particular recycled Kraft fiber and/or recycled semichemical fiber,
- wherein the grammage of the bottom ply (5) is between 40% and 80%, in particular between 65% and 75%, of the total grammage of the first liner (2),
**characterized in that** starch is used to attach the first liner (2) to the corrugating medium (1),
- wherein starch is used in an amount of from 1.97 g/m² to 2.66 g/m², in particular from 1.97 g/m² to 2.48 g/m², if the corrugating medium (1) has an A-flute structure, or
- wherein starch is used in an amount of from 2.38 g/m² to 3.22 g/m², in particular from 2.38 g/m² to 3.00 g/m², if the corrugating medium (1) has a B-flute structure, or
- wherein starch is used in an amount of from 2.20 g/m² to 3.00 g/m², in particular from 2.20 g/m² to 2.80 g/m², if the corrugating medium (1) has a C-flute structure, or
- wherein starch is used in an amount of from 3.42 g/m² to 4.63 g/m², in particular from 3.42 g/m² to 4.32 g/m², if the corrugating medium (1) has an E-flute structure.

13. The method according to claim 12, wherein for attaching the first liner (2) to the corrugating medium (1), the surface of the bottom ply (5) of the first liner (2) is brought to a temperature of between 90°C and 110°C and/or wherein upon contacting with the first liner (2), the corrugating medium (1) is brought to a temperature of between 70°C and 100°C.

14. The method according to any of claims 12 or 13, wherein for attaching the first liner (2) to the corrugating medium (1), a surface of the of the first liner (2) is brought into contact with one or more heating plates for a total duration of between 1.3 s and 3.5 s, optionally of between 1.5 s and 2.5 s, wherein the one or more heating plates have a surface temperature of from 110°C and 115°C.

15. The method according to any of claims 12 to 14, before attaching the first liner (2) to the corrugating medium (1), the first liner (2) has on the side of the top ply (4) a Bendtsen roughness of below 1000, such as below 800, or below 600, determined in accordance with ISO 8791-2:2013.
